# EUROPEAN PATENT SPECIFICATION

(11) **EP 3 789 647 B1**
(45) Date of publication and mention of the grant of the patent: **26.04.2023**
(21) Application number: 20194791.8
(22) Date of filing: 07.09.2020
(51) Int. Cl.: F16L 19/02, F16L 37/088

(54) **PIPE CONNECTION SYSTEM FOR HYDRAULIC PIPES OF AN OFF-ROAD VEHICLE**
ROHRVERBINDUNGSSYSTEM FÜR HYDRAULIKROHRLEITUNGEN EINES GELÄNDEFAHRZEUGS
SYSTÈME DE CONNEXION POUR TUYAUX HYDRAULIQUES D'UN VÉHICULE TOUT-TERRAIN

(30) Priority: 06.09.2019 IT 201900015731
(43) Date of publication of application: 10.03.2021
(73) Proprietor: CNH Industrial Italia S.p.A., 10135 Torino (IT)
(72) Inventor: Ciarrocchi, Marco Pietro, 64027 Sant'Omero (TE) (IT); Zingale, Federico, 48022 Lugo (RA) (IT)
(74) Representative: CNH Industrial IP Department

(56) References cited:
- DE-U1- 7 933 996
- DE-U1- 29 819 549
- US-A- 4 458 926
- US-A- 4 884 829

## Description

### TECHNICAL FIELD

The present invention concerns a pipe connection system, in particular a pipe connection system for hydraulic pipes for an agricultural vehicle.

### BACKGROUND OF THE INVENTION

Off-road vehicles, such as agricultural vehicles, are provided with hydraulic circuits configured to achieve different high power needs of the vehicle, such as controlling brakes, controlling operation of an implement or further moving actuators, et cetera. Such hydraulic circuits, as known, comprise hydraulic pipes which are configured to allow the passage of a hydraulic word fluid, e.g. oil, at high pressure.

It is further common that different system, e.g. implement or actuators, can be attached to and detached from the related hydraulic circuit; accordingly, it is known to provide connection systems so as to avoid fluid leakage in such connections.

A known and successful connection system is the so-called ORFS (O-ring face seal) system, which offers a leak-free seal fitting design and a rugged construction to make it optimal for use in situations with high-pressure, vibration and impulse environments, such as it is common in agricultural vehicles.

In extreme synthesis, such ORFS configuration comprises a male fitting and a female fitting which is configured to be coupled by a threaded connection to male fitting so that they clamp together the ends two pipes/parts of a hydraulic arrangement. Such male and female fittings are provided with an O-ring seal which is therefore compressed between them thereby avoiding leakage.

The system is substantially simple, economic and may be design for any typology and geometry of pipes and hydraulic conduit at high pressures. However, it suffers of the below problems.

First, it is difficult to align coaxially male and female fitting together so that the threaded connection between these latter may be easily and correctly achieved.

Furthermore, it is usually difficult to understand if preload imparted to O-rings is correct, i.e. how much female and male fittings must be pressed one against the other. US4458926 discloses a hose coupling provided with metallic male and female members which are engaged by means of an internally threaded sleeve which is rotatably secured to the female member. The male and female members are provided with tapered male and female seating surfaces.

In view of the above, the need is felt to improve existing ORFS pipe connection systems for off-road vehicles so as to facilitate their use.

An aim of the present invention is to satisfy the above mentioned needs in a cost-effective and optimized way.

### SUMMARY OF THE INVENTION

The aforementioned aim is reached by a pipe connection system as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figures 1A-1B are perspective views of a pipe connection system according to the invention;
- Figure 2 is a plan lateral schematic view of a clamping phase for coupling a pipe connection system as shown in figures 1A-1B;
- Figures 3A, 3B 3C are longitudinal section views of different respective phases of the coupling of a pipe connection system as shown in figures 1A-1B.

### DETAILED DESCRIPTION OF THE INVENTION

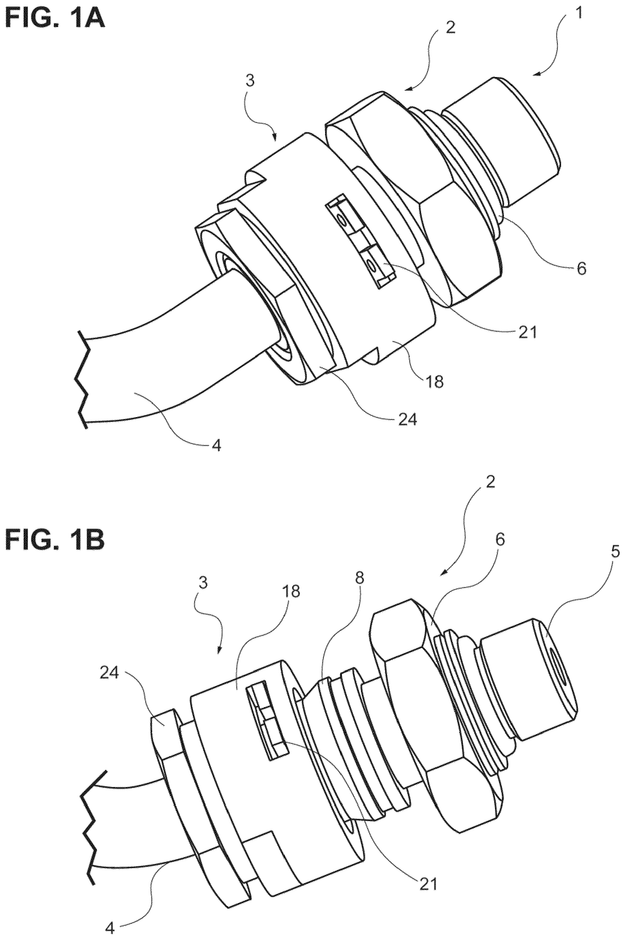

Figures 1A and 1B discloses a pipe connection system 1 comprising essentially a male fitting 2 cooperating with a female fitting 3 so as to fluidly couple in tight manner a pipe 4, preferably carried by female fitting 3 with a hydraulic circuit (not shown) of an off-road vehicle such as an agricultural vehicle, e.g. via an opening 5.

In particular, male fitting 2 comprises a male element 6 having preferably an axisymmetric shape around an axis A and comprising a cylindrical portion 6a defining an inner volume radially delimited by internal surface of cylindrical portion 6a and axially opened along axis A; inner volume is fluidly connected to the above mentioned opening 5. Typically, opening 5 is part of the related circuit and typically a port of a valve or manifold.

Furthermore, male element 6 comprises a terminal portion 6b extending radially around axis A getting away from an outer surface of cylindrical portion 6a and a flanged portion 6c extending radially around axis A getting away from an outer surface of cylindrical portion 6a and axially shifted along axis A with respect to terminal portion 6b.

According to the described shape, radial extension of terminal portion 6b is lower with respect to radial extension of flanged portion 6c and these latter are spaced along axis A so that they define an annular space 7 radially internally delimited by outer surface of cylindrical portion 6a while opened on the opposite radial side and axially delimited by terminal portion 6b and flanged portion 6c.

Female fitting 3 comprises a female element 8 configured to cooperate by contact in a tight manner with male element 6 and coupled to pipe 4, in particular welded to this latter as per ISO 8434-3.

In particular, female element 8 has preferably an axisymmetric shape around axis A and comprises a cylindrical portion 8a defining an inner volume 9 radially delimited by internal surface of cylindrical portion 8a. Female element 8 further comprises a shoulder 11, extending radially from such internal surface of cylindrical portion 8a so that pipe 4 may be inserted inside volume 9 and axially cooperate with shoulder 11 to define an end-stop for such pipe 4.

Furthermore, female element 8 comprises a terminal portion 8b extending radially around axis A getting away from an outer surface of cylindrical portion 8a. Such terminal portion 8b cooperates axially at contact with terminal portion 6b of male element 6.

In particular, at least one between male and female elements 6 and 8 comprises sealant means 12 configured to make the contact coupling between the two elements 6 and 8 in tight manner. Such sealant means 12 advantageously comprise an 0-ring 13 housed in a respective annular opening 14 realized in male and/or female elements 6, 8.

According to the invention, female fitting 3 comprises centering means 16 configured to position coaxially female fitting 3 on male fitting 2 and preloading means 17 configured to impart an axial force on between male and female elements 6 and 8 so as to make sealant means tight.

According to the described configuration, female fitting 3 comprises a first engaging element 18 preferably being a tubular element coaxial with axis A and having an inner diameter greater than outer diameter of terminal portion 6b of male fitting 2 so that these latter may be inserted inside first engaging element 18in a free manner.

According to the described embodiment, first engaging element 18 may comprise the aforementioned centering means 16 preferably comprising a locking ring 21 carried by first engaging element 18and configured to cooperate at contact with male fitting 2 so as to center first engaging element 18, thus female fitting 2, to this latter. In particular, according to the described embodiment, locking ring 21 comprises a Seeger ring carried into an opening 22 realized into first engaging element 18and opened in a portion so as to allow extremities of Seeger ring to extend out of first engaging element 18.

As shown in greater detail in exemplarily figures 1A, 1B, locking ring 21 is an open ring suitable for cooperating at contact with male element 6.

Accordingly, outer surface of terminal portion 6b has a portion having a conical shape wherein the lowest diameter of this latter allows a free insertion of locking ring 21 and the maximum diameter 21 allows a sliding of this latter on terminal portion 6b. Outer surface of terminal portion 6b then comprises a cylindrical portion having the same diameter as the maximum diameter of conical portion, accordingly ring 21 may slide on this latter, till reaching an annular seat 23 realized in cylindrical portion. When reached, ring retracts and accordingly couples first engaging element 18of female fitting 3 with male element 6 of male fitting 2 because the diameter of such annular seat 23 is greater than inner diameter of ring 21 while lateral dimensions is substantially the same. Accordingly, ring 21 is firmly coupled to element 6 and, consequently, female fitting 3 and male fitting 3 are precisely coaxial with respect to axis A.

Female fitting 3 furthermore comprises a second engaging element 24coupled in a movable manner linearly with respect to axis A to first engaging element 18 and advantageously carrying preloading means 17. In particular, second engaging element 24 is configured to impart a force on female element 8 proportionally to its movement on axis A. Accordingly, a movement towards female element 8 increases the preloading force acting on this latter, while a conversely movement decreases such preloading force.

According to the described embodiment, second engaging element 24 comprises a tubular portion 24a having an inner diameter greater than an outer diameter of terminal portion 8b of female element 8 and a flanged terminal portion 24b placed on the end opposite with respect to the one facing female element 8 and extending radially away from outer surface of tubular portion 24a until having an outer diameter greater than tubular portion 24a.

Furthermore, second engaging element 24comprises a shoulder 24c extending radially from an inner surface of tubular portion 24a, such shoulder 24c is advantageously axially placed along axis A at the same position of flanged terminal portion 24b.

According to the described configuration, preloading means 17 comprises a threaded connection 26 between first and second engaging elements 18, 24 of female coupling 3 which allows relative movement of second engaging element 24 towards female element 8 of female fitting 3 so that the aforementioned shoulder 24c may cooperated at contact with terminal portion 8b of female element 8 to generate the preload to be imparted on sealant means 12. As exemplarily described, a male thread 26a is realized on outer surface of tubular portion 24a of second engaging element 24, while a female thread 26b is realized on inner surface of the tubular element of element 18.

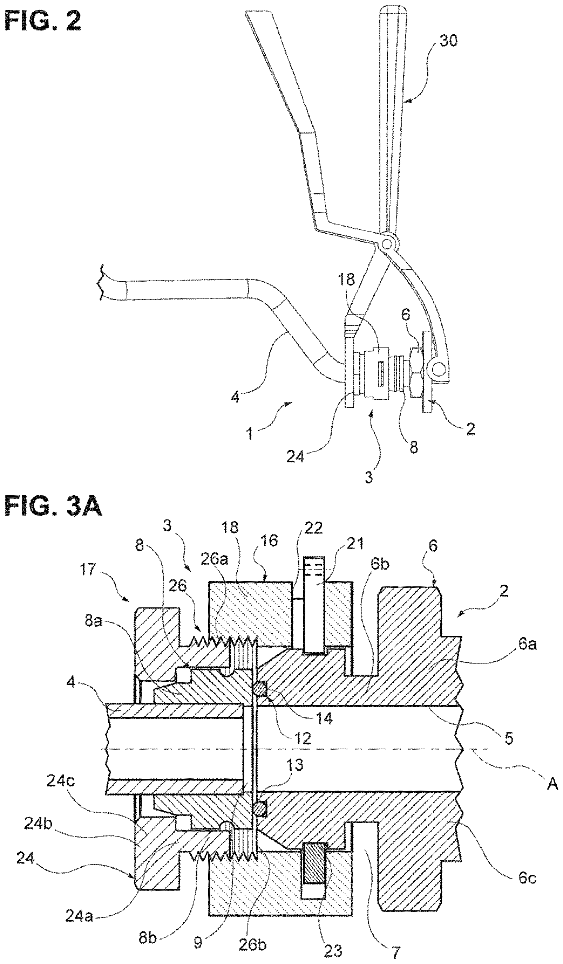

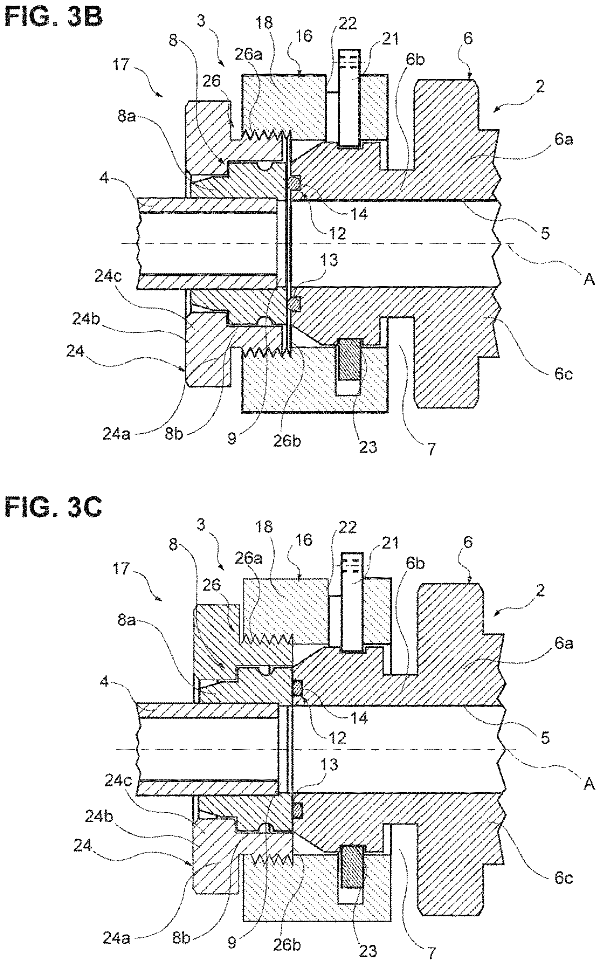

The operation of the pipe connection system 1 according to the invention is hereunder described making reference to figure 2 and figures 3A to 3C.

Pipe 4 is passed through first and second female engaging elements 18, 24 and female element 8 is coupled to pipe 4 by friction. Accordingly, using a dedicated clamp element 30 as exemplarily shown in figure 2, female fitting 3 and male fitting 2 are pressed one with respect to the other so that ring 21 meets conical surface of the outer surface of terminal portion 6b of male element 6 of male fitting 2 and slides on this latter till reaching seat 23 (See Figure 3A).

In such configuration centering, i.e. coaxiality between male and female fittings 2, 3 is assured by locking ring 21. Correct positioning of locking ring 21, when using a Seeger ring, is clearly visible by seeing parallel position of opened terminal ends of the ring inside seat 22 of tubular element 18.

When such centered position is reached, second engaging element 24 can be rotated so that threaded connection 26 starts to move this latter inside tubular element 18 till shoulder 24c reaches in contact female element 8, as shown in figure 3B.

When such condition is reached, the force imparted by torque via thread connection 26 is directly imparted to female element 8 and, since male element 6 is maintained fixed by locking ring 21, then to sealant means 12 which are compressed. Accordingly, all reaction forces are supported by female fitting 3 thereby maintain in tight contact male fitting 2 elements.

In view of the foregoing, the advantages of a pipe connection system 1 according to the invention are apparent.

Even if small modifications to male and female fittings are required, the installation layout is same as in current ORFS system.

The installation is simple, quicker and allows correct centering between male and female fittings. A proper tool can be designed to facilitate such axial installation.

The conical shape of outer portion of terminal portion 6b of male element 6 allows a soft and guided insertion of locking ring 21.

The use of a Seeger ring allows to understand correct position of this latter simply by visible indication given by parallel position of its terminal ends.

Since centering is assured by centering means 16, and since second engaging element 24is carried (i.e. is yet coupled by threaded connection 26) by first engaging element 18of female coupling, torque may be quickly supplied by threaded connection 26 without risk of bad thread approach.

Consequently, axial compressive force applied to sealant means 12 can be controlled and extra-compression due to bad thread approach are avoided.

It is clear that modifications can be made to the described pipe connection system 1 which do not extend beyond the scope of protection defined by the claims.

For example, shape of elements 6, 8 and 18, 24 of male and female fittings 2, 3 may be varied according to hydraulic arrangement necessities.

Furthermore, centering means 16 and preloading means 17 may be substituted by equivalent means which accomplish to the same function.

## Claims

1. Pipe connection system (1) for connecting a first portion (4) and a second portion (5) of a hydraulic arrangement, said pipe connection system (1) comprising a male fitting (2) provided with a male element (6) connected to said first portion (4) and a female fitting (3) provided with a female element (8) connected to said second portion (5), said male and female portions (6, 8) defining a fluid connection between first and second portions (4, 5) along a common axis (A) and cooperating at contact in sealed manner via sealant means (12) carried by at least one between said male female elements (6, 8), said female fitting (3) being provided with centering means (16) configured to position said female fitting (3) on said male fitting (2) coaxially to said common axis (A) and preloading means (17) configured to impart a force to said male and female elements (6, 8) so that they are pushed one against the other, thereby compressing said sealant means (12),
**characterised in that** said female fitting (3) comprises a first tubular element (18), said centering means (16) comprising a locking ring (21), said tubular element (18) defining a seat (22) configured to house said locking ring (21), said locking ring (21) being dimensioned to cooperate by sliding with an outer surface of said male element (6) till reaching a seat (23) realized in said male element (6) thereby cooperating at contact with said first tubular element (18).

2. Pipe connection system according to claim 1, wherein said locking ring (21) is a Seeger ring.

3. Pipe connection system according to claim 1 or 2, wherein said outer surface of said male element (6) has a conical shape configured to allow a free insertion within said locking ring (21) and its sliding on this latter till reaching said seat (23) realized in said male element (6).

4. Pipe connection system according to any of claims 1 to 3, wherein said female fitting (3) comprises a second tubular element (24) coupled to said first tubular element (18) in a linear movable manner along said axis (A), said second tubular element (24) being configured to cooperate at contact with said female element (8) so as to impart a load to this latter.

5. Pipe connection system according to claim 4, wherein said load is proportional to the movement of said second tubular element (24) against said female element (8).

6. Pipe connection system according to claim 4 or 5, wherein said linear movable coupling between said first and second tubular elements (18, 24) is a threaded connection (26) .

7. Pipe connection system according to any of the preceding claims, wherein said sealant means (12) comprises an O-ring (13) carried in a respective seat (15) realized in said at least one between male and female elements (6, 8).

## Patentansprüche

1. Rohrverbindungssystem (1) zum Verbinden eines ersten Abschnitts (4) und eines zweiten Abschnitts (5) einer hydraulischen Anordnung, wobei das Rohrverbindungssystem (1) einen Steckanschluss (2), der mit einem Steckelement (6) versehen ist, das mit dem ersten Abschnitt (4) verbunden ist, und einen Aufnahmeanschluss (3) aufweist, der mit einem Aufnahmeelement (8) versehen ist, das mit dem zweiten Abschnitt (5) verbunden ist, wobei das Steckelement und das Aufnahmeelement (6, 8) eine Fluidverbindung zwischen dem ersten und dem zweiten Abschnitt (4, 5) entlang einer gemeinsamen Achse (A) definieren und über eine Dichtungseinrichtung (12), die von dem Steckelement (6) und/oder dem Aufnahmeelement (8) getragen wird, in dichtendem Kontakt zusammenwirken, wobei der Aufnahmeanschluss (3) mit einer Zentriereinrichtung (16), die dazu eingerichtet ist, den Aufnahmeanschluss (3) an dem Steckanschluss (2) koaxial mit der gemeinsamen Achse (A) anzuordnen, und mit einer Vorspanneinrichtung (17) versehen ist, die dazu eingerichtet ist, eine Kraft auf das Steckelement (6) und das Aufnahmeelement (8) aufzubringen, so dass diese gegeneinander gedrückt werden, wodurch die Dichtungseinrichtung (12) komprimiert wird,
**dadurch gekennzeichnet, dass**
der Aufnahmeanschluss (3) ein erstes rohrförmiges Element (18) aufweist, wobei die Zentriereinrichtung (16) einen Sicherungsring (21) aufweist, wobei das rohrförmige Element (18) einen Sitz (22) definiert, der dazu eingerichtet ist, den Sicherungsring (21) aufzunehmen, wobei der Sicherungsring (21) dimensioniert ist, um mit einer Außenfläche des Steckelements (6) gleitend zusammenzuwirken, bis er einen Sitz (23) erreicht, der in dem Steckelement (6) ausgebildet ist, sodass er mit dem ersten rohrförmigen Element (18) in Kontakt zusammenwirkt.

2. Rohrverbindungssystem nach Anspruch 1, wobei der Sicherungsring (21) ein Seeger-Ring ist.

3. Rohrverbindungssystem nach Anspruch 1 oder 2, wobei die Außenfläche des Steckelements (6) eine konische Form hat, die dazu eingerichtet ist, ein freies Einführen in den Sicherungsring (21) und dessen Gleitbewegung an dem letzteren zu ermöglichen, bis er den Sitz (23), der in dem Steckelement (6) ausgebildet ist, erreicht.

4. Rohrverbindungssystem nach einem der Ansprüche 1 bis 3, wobei der Aufnahmeanschluss (3) ein zweites rohrförmiges Element (24) aufweist, das mit dem ersten rohrförmigen Element (18) entlang der Achse (A) linear beweglich verbunden ist, wobei das zweite rohrförmige Element (24) dazu eingerichtet ist, mit dem Aufnahmeelement (8) in Kontakt zusammenzuwirken, um auf letzteres eine Last aufzubringen.

5. Rohrverbindungssystem nach Anspruch 4, wobei die Last proportional zur Bewegung des zweiten rohrförmigen Elements (24) gegen das Aufnahmeelement (8) ist.

6. Rohrverbindungssystem nach Anspruch 4 oder 5, wobei die linear bewegliche Verbindung zwischen dem ersten und dem zweiten rohrförmigen Element (18, 24) eine Schraubverbindung (26) ist.

7. Rohrverbindungssystem nach einem der vorhergehenden Ansprüche, wobei die Dichtungseinrichtung (12) einen O-Ring (13) umfasst, der in einem entsprechenden Sitz (15) aufgenommen ist, der in dem Steckelement und/oder dem Aufnahmeelement (6, 8) ausgebildet ist.

## Revendications

1. Système de raccordement de tuyaux (1) pour connecter une première partie (4) et une seconde partie (5) d'un agencement hydraulique, ledit système de raccordement de tuyaux (1) comprenant un raccord mâle (2) muni d'un élément mâle (6) connecté à ladite première partie (4) et un raccord femelle (3) muni d'un élément femelle (8) connecté à ladite seconde partie (5), lesdites parties mâle et femelle (6, 8) définissant une connexion fluide entre les première et seconde parties (4, 5) le long d'un axe commun (A) et coopérant au contact de façon étanche par l'intermédiaire de moyens d'étanchéité (12) portés par au moins l'un desdits éléments mâle et femelle (6, 8), ledit raccord femelle (3) étant pourvu de moyens de centrage (16) configurés pour positionner ledit raccord femelle (3) sur ledit raccord mâle (2) coaxialement audit axe commun (A) et de moyens de précharge (17) configurés pour communiquer une force auxdits éléments mâle et femelle (6, 8) de sorte qu'ils sont poussés l'un contre l'autre, comprimant ainsi lesdits moyens d'étanchéité (12),
**caractérisé en ce que** ledit raccord femelle (3) comprend un premier élément tubulaire (18), lesdits moyens de centrage (16) comprenant une bague de verrouillage (21), ledit élément tubulaire (18) définissant un siège (22) configuré pour loger ladite bague de verrouillage (21), ladite bague de verrouillage (21) étant dimensionnée pour coopérer en coulissant avec une surface extérieure dudit élément mâle (6) jusqu'à atteindre un siège (23) réalisé dans ledit élément mâle (6), coopérant ainsi au contact avec ledit premier élément tubulaire (18).

2. Système de raccordement de tuyaux selon la revendication 1, dans lequel ladite bague de verrouillage (21) est une bague de type Seeger.

3. Système de raccordement de tuyaux selon la revendication 1 ou 2, dans lequel ladite surface extérieure dudit élément mâle (6) a une forme conique configurée pour permettre une insertion libre dans ladite bague de verrouillage (21) et son coulissement sur cette dernière jusqu'à atteindre ledit siège (23) réalisé dans ledit élément mâle (6).

4. Système de raccordement de tuyaux selon l'une quelconque des revendications 1 à 3, dans lequel ledit raccord femelle (3) comprend un second élément tubulaire (24) couplé audit premier élément tubulaire (18) de manière à pouvoir se déplacer linéairement le long dudit axe (A), ledit second élément tubulaire (24) étant configuré pour coopérer au contact dudit élément femelle (8) de manière à communiquer une charge à ce dernier.

5. Système de raccordement de tuyaux selon la revendication 4, dans lequel ladite charge est proportionnelle au mouvement dudit second élément tubulaire (24) contre ledit élément femelle (8).

6. Système de raccordement de tuyaux selon la revendication 4 ou 5, dans lequel ledit accouplement linéaire mobile entre lesdits premier et second éléments tubulaires (18, 24) est une connexion filetée (26).

7. Système de raccordement de tuyaux selon l'une quelconque des revendications précédentes, dans lequel lesdits moyens d'étanchéité (12) comprennent un joint torique (13) porté dans un siège respectif (15) réalisé dans ledit au moins un parmi les éléments mâle et femelle (6, 8).
